# EUROPÄISCHE PATENTSCHRIFT

(11) **EP 1 185 844 B1**
(45) Veröffentlichungstag und Bekanntmachung des Hinweises auf die Patenterteilung: **30.07.2003**
(21) Anmeldenummer: 00945709.4
(22) Anmeldetag: 06.06.2000
(51) Int. Cl.: G01J 11/00

(54) **STRAHLUNGS-MESSVORRICHTUNG**
ILLUMINATION MEASURING DEVICE
DISPOSITIF DE MESURE DE RAYONNEMENT

(30) Priorität: 13.06.1999 DE 19926812
(43) Veröffentlichungstag der Anmeldung: 13.03.2002
(73) Patentinhaber: Transmit Gesellschaft für Technologietransfer mbH, 35394 Giessen (DE); Euteneuer, Arno, 35041 Marburg (DE); Giessen, Harald, 67297 Marnheim (DE); Hofmann, Martin, 35096 Weimar-Niederweimar (DE)
(72) Erfinder: EUTENEUER, Arno, D-35041 Marburg (DE); GIESSEN, Harald, D-67297 Marnheim (DE); HOFMANN, Martin, D-35096 Weimar-Niederweimar (DE)
(74) Vertreter: Olbricht, Karl Heinrich, Dipl.-Phys.
(86) Internationale Anmeldenummer: EP0005177
(87) Internationale Veröffentlichungsnummer: WO00077482

(56) Entgegenhaltungen:
- DE-A- 2 247 709
- DE-A- 3 827 913
- US-A- 4 628 473

## Beschreibung

Die Erfindung betrifft eine Vorrichtung zur Beeinflussung und Messung gepulster elektromagnetischer Strahlung, insbesondere einen Autokorrelator gemäß dem Oberbegriff von Anspruch 1.

In Autokorrelatoren werden nach Strahlaufteilung optische Weglängen gezielt verändert, beispielsweise mit gesteuerter periodischer Schwankung, um mit Teilstrahlen Pulsdauem und Pulsformen zu messen. Wichtig ist der technologische Hintergrund bei Laseranwendungen, vor allem mit kurzen Lichtpulsen von z.B. weniger als 1 ns oder 100 ps, wofür man die Kenntnis der zeitlichen Pulsform braucht. Sie wird durch Messung der Autokorrelationsfunktion der Pulse bestimmt.

In einem Autokorrelator wird üblicherweise interferometer-ähnlich ein Lichtstrahl mittels halbdurchlässiger Spiegel in zwei Anteile aufgespalten, die gegeneinander zeitversetzt und danach in einem nichtlinear-optischen Kristall zusammengeführt werden, wobei in einem Detektor die optische Summenfrequenz beider Teilstrahl-Signale gebildet wird. Ein Beispiel ist in US-PS 4 628 473 angegeben. Durch zeitintegrierte Messung des Summenfrequenzsignals, dessen Intensität von der zeitlichen Überlappung der zueinander zeit- und/oder ortsverschobenen Lichtpulsanteile abhängt, erhält man die Autokorrelationsfunktion in Abhängigkeit von der Einzelstrahl-Verzögerung. Man hat z.B. gemäß US-PS 4 406 542 einen rotierenden Glasblock eingesetzt, um eine unterschiedliche Verzögerung zweier Strahlwege zu bewirken.

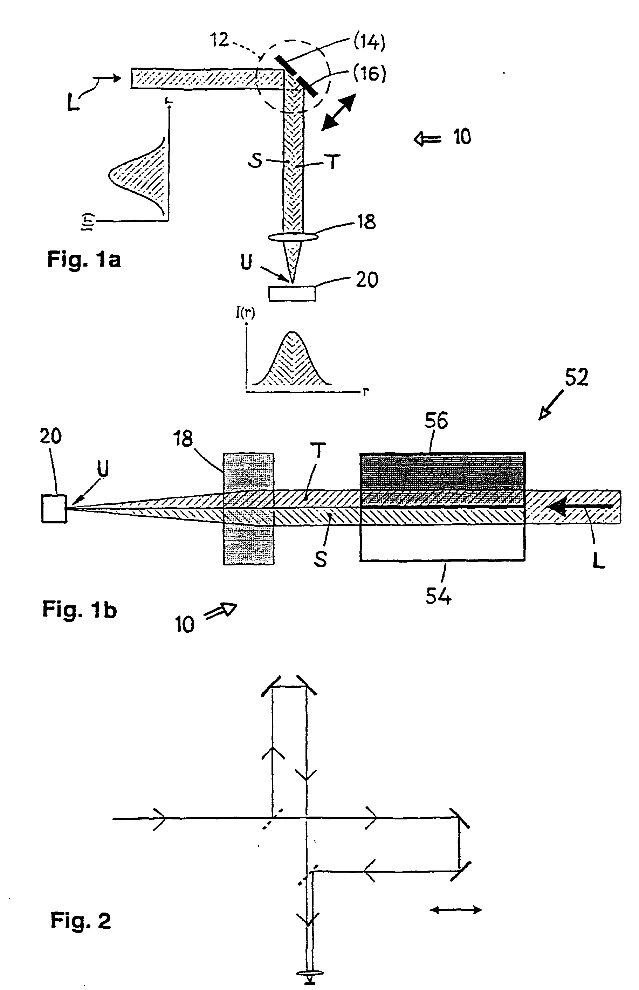

Die Strahlteilung erfolgt allgemein in einem Interferometer vom Michelson-Typ mit zwei halbdurchlässigen Spiegeln und einer geometrisch-mechanischen Komponente, welche die erzeugten Teilstrahlen gegeneinander zeitversetzt. Das lehrbuchbekannte Prinzipschema ist in Fig. 2 gezeigt. Weil die Teilstrahlen zunächst über getrennte Wege geführt und sodann rekombiniert werden müssen, ist eine teure Präzisionsmechanik sowie Dünnschichtoptik erforderlich. Die Justierung ist recht mühsam; sie wird durch die notwendige Phasenanpassung des nichtlinear-optischen Kristalls erschwert. Zur Abhilfe kann man als Nichtlinearität eine Zweiphotonenabsorption in einem Photodetektor benutzen und den zeitintegrierten Photostrom in Abhängigkeit von der Einzelstrahl-Verzögerung messen, wie z.B. in dem Artikel "Autocorrelation measurement of 6-fs pulses based on the two-photon-induced photocurrent in a GaAsP photodiode" von J. K. Ranka et al. in Optics Letters 22 (1997) No. 17, S. 1344...1346 beschrieben.

Ein in DE-OS 2 247 709 beschriebenes Interferometer verwendet zur Aufteilung des einfallenden, kohärenten Lichtstrahls in zwei Teilstrahlen ein Kösters-Prisma. Die erzeugten Teilstrahlen werden durch ein fresnellsches Biprisma parallelisiert und sind mittels einer sich drehenden Glasplatte seitlich zueinander versetzbar, so daß eine zu untersuchende Objektoberfläche abgetastet werden kann. Nach Durchtreten durch ein Teleskopsystem treffen die parallelen Teilstrahlen auf einen Spiegel und durchlaufen den beschriebenen Lichtweg wieder in umgekehrter Richtung. Sie werden im Kösters-Prisma wieder zu einem Strahl vereinigt, der dann an einer dem einfallenden Lichtstrahl abgewandten Prismenseite austritt Diese Anordnung hat den Nachteil, daß die optische Weglänge der Teilstrahlen sehr groß ist, was eine hohe Präzision bei der Anordnung der optischen Elemente erfordert. Die Justierung nicht nur der Prismen und des Teleskopsystems ist mithin sehr aufwendig und mühsam.

Die Erfindung verfolgt das Ziel, die Impulsform-Messung und namentlich die Auto- bzw. Kreuzkorrelation mit stark verringerten Kosten und reduziertem Justage-Aufwand zu ermöglichen. Vor allem soll ein technisch einfacher, besonders kostengünstig herstellbarer Autokorrelator geschaffen werden, der direkt z.B. in Ultrakurzpuls-Lasersysteme integrierbar ist.

Hauptmerkmale der Erfindung sind in Anspruch 1 angegeben. Weitere Merkmale und Ausgestaltungen sind Gegenstand der Ansprüche 2 bis 13.

Bei einer Vorrichtung zur Beeinflussung und Messung gepulster elektromagnetischer Strahlung, insbesondere Autokorrelator, mit einem Strahlaufnehmer, der ankommende elektromagnetische Strahlung, vorzugsweise paralleles Laserlicht, in zwei Teilstrahlen aufspaltet, mit einer hinter dem Strahlaufnehmer angeordneten Überlagerungs- oder Fokussiereinrichtung, vorzugsweise einer Linse, welche die Teilstrahlen zusammenführt, und mit einem im Vereinigungs-Bereich der Teilstrahlen angeordneten Detektor, welcher die Teilstrahlen erfaßt, sieht die Erfindung laut Anspruch 1 vor, daß der mindestens zweiteilige Strahfaufnehmer nebeneinander angeordnete Strahlprofilteiler aufweist, durch die in getrennten, vorzugsweise parallelen Teilstrahlen vor deren Zusammenführung Änderungen der zeitbezogenen Strahlcharakteristik bewirkbar sind, wobei die Strahlprofilteiler relativ zueinander unterschiedlich derart steuerbar sind, daß eine Änderung mit bzw. in einem der Strahlprofilteiler zu einer gesteuerten Veränderung der zeitbezogenen Strahlcharakteristik führt.

Im Rahmen der vorliegenden Anmeldung werden darunter alle zeitlichen Verschiebungen und/oder Phasenänderungen verstanden, die unterschiedliche Reflexions- bzw. Durchlaßverzögerungen, Phasenveränderungen und/oder optische Weglängenänderungen zur Folge haben. Der Begriff räumliches Strahlprofil (spatial beam profile) meint die Intensitätsverteilung quer zur Strahlausbreitungs-Richtung, d.h. eine Funktion I (x, y), wobei x, y transversale Koordinaten sind, oder I (r), worin r eine zum Strahl radiale Koordinate bezeichnet. Demgemäß umfaßt ein Strahlprofilteiler eine Einrichtung, die das räumliche Strahlprofil des einfallenden Lichts in Teilstrahlen mit jeweils eigenem Strahlprofil umsetzt Eine herkömmliche Strahlaufspaltung ohne Profiländerung, etwa in einem teildurchlässigen Spiegel, ist nicht gemeint.

Ein erfindungsgemäßer Autokorrelator kostet in der Herstellung nur einen Bruchteil, z.B. etwa ein Zehntel des Preises üblicher Systeme. Der sehr übersichtliche und stabile mechanische Aufbau erfordert außerordentlich geringe Mittel.

Laut Anspruch 2 ist der Strahlaufnehmer als Spiegel-, Platten-, Kammer- oder Kristall-System mit einem Strahlprofilteiler ausgebildet, der einen Basis-Teilstrahl schafft oder unverändert läßt, während durch wenigstens einen weiteren, dem ersteren benachbarten Strahlprofilteiler die zeitbezogene Charakteristik des bzw. jedes anderen Teilstrahls gezielt beeinflußbar ist.

Anspruch 3 sieht vor, daß der Strahlaufnehmer ein in seiner Spiegelfläche geteilter Spiegel ist, dessen Teilspiegel zueinander relativbeweglich sind. Gegenüber herkömmlichen Autokorrelatoren ist ein entscheidender Vorteil der Teilspiegel-Konstruktion das Fehlen jeglicher Dispersion, da man keinerlei dispersive Elemente benötigt. Bevorzugt ist wenigstens ein Teilspiegel relativ zu einem beispielsweise ortsfesten oder phasenverschoben bewegten Teilspiegel in Richtung der Spiegelflächen-Normalen verschieblich. Dazu kann zumindest einer der Strahlprofilteiler laut Anspruch 4 mit einem Schwingungserzeuger verbunden sein, z.B. mit einem rückseitig angeordneten Lautsprecher, Piezoschwinger o.dgl.

Eine alternative Bauform gemäß Anspruch 5 verwendet als Strahlprofilteiler Durchstrahl-Elemente, die relativ zueinander und/oder um eine zum einfallenden Strahl in einem Winkel stehende Achse drehbar sind, wodurch Änderungen von optischen Weglängen und Phasenverschiebungen bewirkt werden. Laut Anspruch 6 sind zwei oder mehr Durchstrahl-Elemente als Flachkörper ausgebildet, deren Dicke bzw. Materialstärke auf die zu messende Pulsform abgestimmt ist. Sie können gemäß Anspruch 7 aus Glas, Quarz, Kunststoff o.dgl. bestehen, Streifen- oder Plättchenform haben und dicht nebeneinander angeordnet sein. Eine Hochkant- oder Quer-Anordnung der z.B. teils feststehenden, teils beweglichen Flachkörper läßt sich konstruktiv besonders elegant und außerdem sehr kostengünstig realisieren. Zweckmäßig ist nach Anspruch 8 wenigstens einer der Strahlprofilteiler motorisch und/oder schwingend antreibbar.

In weiterer Ausgestaltung der Erfindung kann der Strahlaufnehmer gemäß Anspruch 9 ein z.B. würfel- oder quaderförmiger Kristall sein, der einen entweder kontaktierten oder kontaktfreien Teilkörper und wenigstens einen weiteren, mit Kontaktflächen versehenen Teilkörper aufweist, welcher durch ein elektrisches oder magnetisches oder elektromagnetisches Feld zustandsveränderlich ist, so daß z.B. eine Phasenverschiebung durch Brechungsindex-Änderung zustandekommt. Bei dieser Bauform entfallen bewegliche Elemente bzw. Baugruppen; der Autokorrelator ist daher besonders robust und gut zu handhaben.

Gemäß Anspruch 10 weist der Strahlaufnehmer ein durchstrahlbares Gehäuse auf, das als Strahlprofilteiler wenigstens zwei Durchlaßteile umschließt, durch die in getrennten, vorzugsweise parallelen Teilstrahlen vor deren Zusammenführung Änderungen der zeitbezogenen Strahlcharakteristik bewirkbar sind, wobei ein Durchlaßteil, welcher einen Basis-Teilstrahl schafft oder unverändert läßt, parallel zu wenigstens einem weiteren Durchlaßteil angeordnet ist, mit bzw. in dem die zeitbezogene Charakteristik des bzw. jedes anderen Teilstrahls gezielt beeinflußbar ist. Auf diese Weise lassen sich unterschiedliche Reflexions- oder Durchlaßverzögerungen, Phasenveränderungen und/oder optische Weglängenänderungen herbeiführen. Die Vorrichtung zeichnet sich zudem dadurch aus, daß sie ohne bewegliche Bauelemente realisierbar ist.

In Anspruch 11 ist speziell vorgesehen, daß der bzw. jeder andere Teilstrahl mit dem weiteren Durchlaßteil phasenverschoben, vorzugsweise gegenphasig zu dem einen Teilstrahl steuerbar ist, wodurch 'auf überaus einfache Weise Spiegel- bzw. Interferenz-Effekte möglich werden.

Durch die Kombination der geometrischen Strahlprofilteilung und ultrakurzen Pulsen von weniger als 1 ns, bevorzugt weniger als 100 ps Dauer derart, daß ausgangsseitig Teilstrahlen mit wenigstens zwei unterschiedlichen optischen Weglängen oder Phasenveränderungen vor oder in einem Vereinigungs-Bereich mit einer Meßeinrichtung, z.B. einem Detektor erfaßbar sind, eröffnen sich neue Anwendungen, beispielsweise die Puls-Charakterisierung mit einem nichtlinearen Kristall oder einem Zweiphotonen-Absorptions-Detektor (TPA); femer Erzeugung und Messung von Pulsmustem, Abstands- oder Chirp-Messung, Phasenmessung bzw. -verzerrung, Material-Charakterisierung und -Analyse, Polarisations-Einstellung usw.

Anspruch 12 sieht hierzu vor, daß zwischen dem Strahlaufnehmer und wenigstens einem Strahlprofilteiler oder zwischen wenigstens einem Strahlprofilteiler und der Vereinigungs-Einrichtung ein zu untersuchendes Objekt einführbar ist, so daß beispielweise eine Materialart oder -Zusammensetzung anzeig- und/oder meßbar ist.

Eine weitere Alternative besteht laut Anspruch 13 darin, daß ein zu untersuchendes Objekt einen der Strahlprofilteiler bildet und/oder daß zwei oder mehr zu untersuchende Objekte je einen der Strahlprofilteiler bilden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1a: eine schematische Darstellung eines neuartigen Autokorrelators,
- Fig. 1b: eine schematische Darstellung eines weiteren neu artigen Autokorrelators,
- Fig. 2: eine schematische Darstellung eines herkömmlichen Autokorrelators vom Interferometer-Typ,
- Fig. 3a: eine Draufsicht auf eine Spiegelanordnung,
- Fig. 3b: eine Seitenansicht der Anordnung von Fig. 3a,
- Fig. 4a: eine Draufsicht auf eine Plättchenanordnung,
- Fig. 4b: eine Seitenansicht der Anordnung von Fig. 4a,
- Fig. 5a: eine Draufsicht auf eine Kristallanordnung und
- Fig. 5b: eine Seitenansicht der Anordnung von Fig. 5a.

Das Schema von Fig. 1a veranschaulicht eine allgemein mit 10 bezeichnete Vorrichtung, die einen Strahlaufnehmer 12 aufweist. Er umfaßt zumindest zwei relativ zueinander bewegliche Strahlprofilteiler 14, 16, beispielsweise parallele Teilspiegel, durch die einfallendes gepulstes Licht L in zwei Teilstrahlen S, T aufgespalten wird, die in einer Zusammenführ-Einrichtung 18 wieder vereinigt werden. Im Überlagerungs-Bereich U oder in dessen Umfeld kann sich ein Detektor 20 befinden, z.B. ein Zweiphotonen-Detektor. Neben den Strahlen L bzw. S, T ist das zugehörige Intensitätsprofil I (r) mit jeweils gleichartiger Schraffur schematisch angedeutet.

Aus Fig. 1b geht hervor, daß als Strahlaufnehmer für das einfallende Licht L ein hier als Modulator 52 bezeichneter Körper dienen kann. Dieser hat als Strahlprofilteiler einen z.B. axial durchstrahlbaren Durchlaßteil 54 für einen Basis-Teilstrahl S und einen benachbarten weiteren Durchlaßteil 56, mit dem die zeitbezogene Charakteristik eines anderen Teilstrahls T in steuerbarer Weise verändert werden kann, worauf die Teilstrahl-Zusammenführung im Überlagerungs-Bereich U erfolgt.

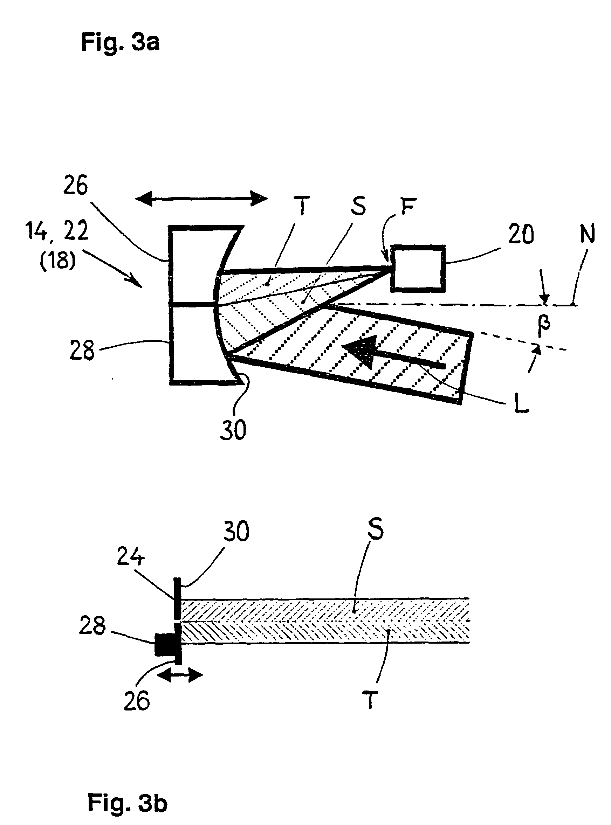

In Fig. 3a und 3b ist ein konkretes Ausführungsbeispiel der allgemeinen Anordnung von Fig. 1a dargestellt. Dieser Strahlaufnehmer 12 hat ein Konkavspiegel-System 22 mit Strahlprofilteilern in Form eines entweder beweglichen oder unbeweglichen Teilspiegels 24, der parallel zu einem beweglichen Teilspiegel 26 verläuft, welcher rückseitig mit einem Lautsprecher 28 oder einem anderen Schwingungserzeuger bewegungsverbunden ist. Das zu analysierende Licht L verteilt sich zu etwa gleichen Anteilen auf die Teilspiegel 24, 26; es fällt unter einem mäßigen oder geringen Winkel β zur Normalen der Spiegelfläche 30 ein. Die reflektierten Teilstrahlen S, T führt das zugleich als Fokussier-Einrichtung wirkende Spiegel-System 22 in einem Fokus F zusammen. Dort oder in seinem Umfeld (U, Fig. 1) befindet sich z.B. ein Zweiphotonenabsorptions-Detektor 20. Im Betrieb werden infolge der Relativbewegung zwischen den Teilspiegeln 24, 26 die räumlich getrennten Teilstrahlen S, T gegeneinander verzögert. Für einen solchen Autokorrelator benötigt man keinerlei dispersive Bauelemente.

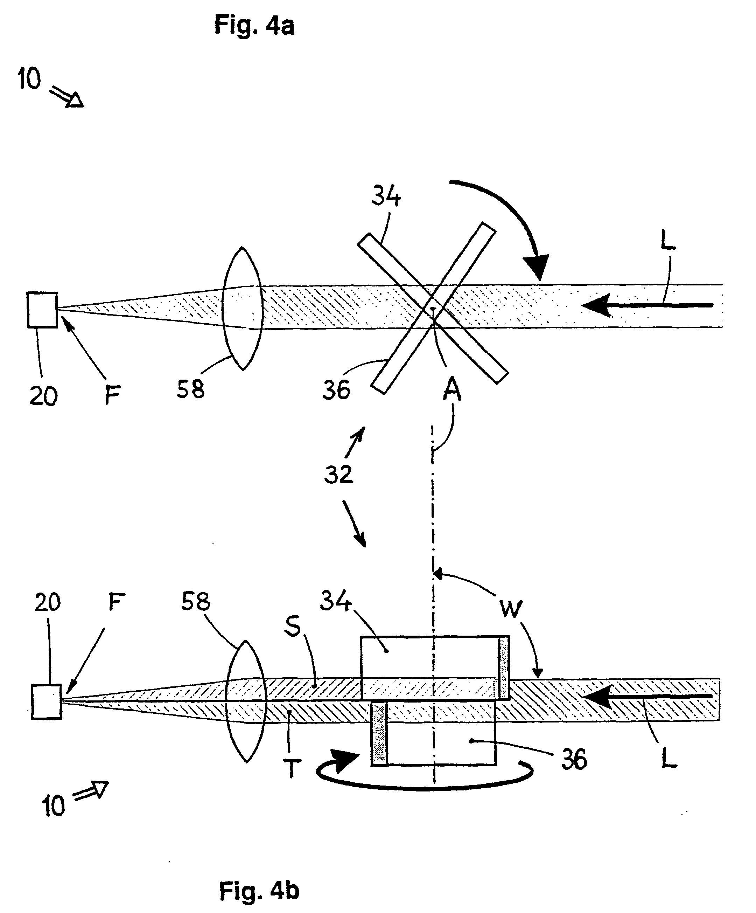

Bei der in Fig. 4a und 4b gezeigten Vorrichtung 10 erfolgt die Strahlprofilteilung von einfallendem Laserlicht L mit Durchstrahl-Elementen 32. Im dargestellten Beispiel sind als Strahlprofilteiler ein unbeweglicher Durchlaßteil 34 und ein drehbarer Durchlaßteil 36 vorhanden. Beide können Streifen- bzw. Plättchenform haben und z.B. aus Glas, Quarz oder Kunststoff bestehen. Wird der drehbare Teil 36 - beispielsweise motorisch - angetrieben, so variiert dies je nach der momentanen Durchstrahltiefe die optische Weglänge im Teilstrahl T relativ zu dem unveränderten Basis-Teilstrahl S. Wiederum ermöglicht die Zusammenführung mittels einer Fokussier-Einrichtung 58 im Fokus F die Detektor-Abtastung zur Gewinnung der Autokorrelationsfunktion.

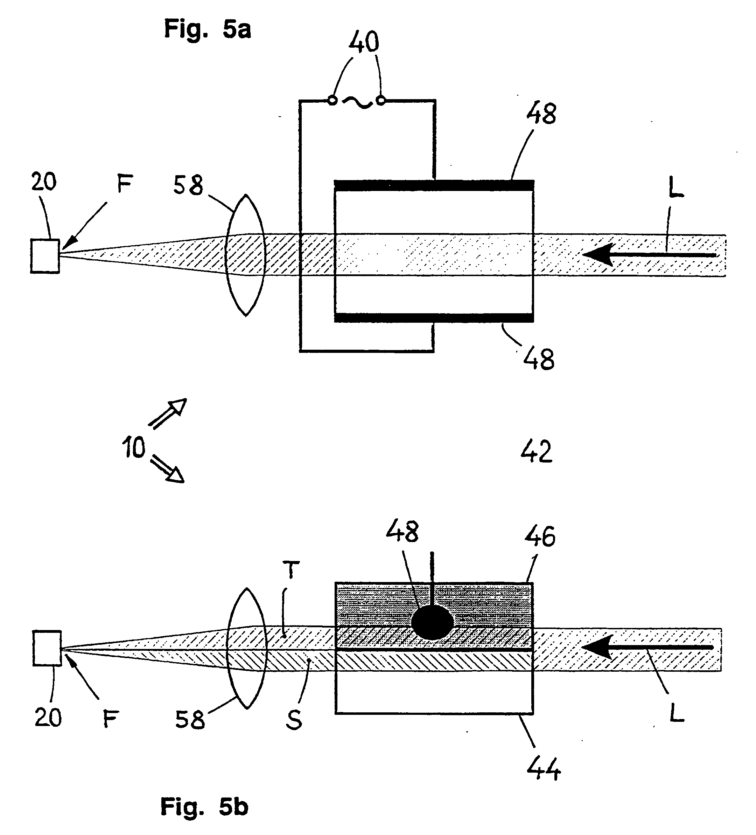

Noch eine andere Ausführungsform gemäß Fig. 5a und 5b entspricht dem Prinzipaufbau nach Fig. 1b und erfordert keine mechanisch bewegten Bauteile. Das Laserlicht L durchstrahlt hierbei ein Kristall-System 42, das als Strahlprofilteiler einen entweder kontaktierten oder kontaktfreien Teilkörper 44 und daneben einen kontaktierten Teilkörper 46 aufweist, dessen Kontaktflächen 48 mit Anschlüssen 40 für eine (nur schematisch angedeutete) Spannungsquelle versehen sind. Man erkennt, daß der kontaktierte Teilkörper 46 als elektrooptischer Kristall den Teilstrahl T beeinflußt, der durch die Fokussier-Einrichtung 58 mit dem unveränderten Basis-Teilstrahl S im Fokus F vereinigt wird. Die gegeneinander verzögerten Strahlanteile werden im Detektor 20 erfaßt, der im Vereinigungs-Bereich der Teilstrahlen S, T angeordnet ist.

Die Erfindung ist nicht auf eine der vorbeschriebenen Ausführungsformen beschränkt, sondern in vielfältiger Weise abwandelbar. Zum Beeinflussen und Messen gepulster elektromagnetischer Strahlung, z.B. parallelen Laserlichts L, ist sie bzw. es insbesondere in einem Autokorrelator mit einem Strahlaufnehmer 12 oder einem Modulator 52 teilbar, hinter diesem durch eine Überlagerungs-Einrichtung 18 bzw. 58, z.B. eine Linse, zusammenführbar und im Vereinigungs-Bereich von einem Detektor 20 erfaßbar. Als Durchlaß-System 52 umschließt der Strahlaufnehmer in einem durchstrahlbaren Gehäuse als Strahlprofilteiler wenigstens zwei Durchlaßteile 54, 56, mit bzw. in denen getrennte, vorzugsweise parallele Teilstrahlen S, T vor der Zusammenführung in der zeitbezogenen Strahlcharakteristik veränderbar sind. Bevorzugt hat der Strahlaufnehmer 12 nach der Erfindung ein wenigstens zweiteiliges Spiegel- (22), Platten-(32) oder Kammer- bzw. Kristall-System (42) mit einem Strahlprofilteiler 14, 24, 34, 44, der einen Basis-Teilstrahl S schafft oder unverändert läßt, während in wenigstens einem benachbarten Strahlprofilteiler 16, 26, 36, 46 die zeitbezogene Charakteristik des bzw. jedes anderen Teiltrahls T unterschiedlich steuerbar ist, um insbesondere Reflexions- oder Durchlaßverzögerungen, Phasenveränderungen und/oder optische Weglängenänderungen zu bewirken.

### Bezugszeichenliste

- A: Achse
- β: Winkel
- F: Fokus
- L: Laserlicht
- N: Normale (zu 22)
- S: Basis-Teilstrahl
- T: weiterer Teilstrahl
- U: Überlagerungs-Bereich
- W: Winkel
- 10: Autokorrelator
- 12: Strahlaufnehmer
- 14: unbeweglicher oder beweglicher Teil
- 16: beweglicher Teil
- 18: Zusammenführ-Einrichtung
- 20: Detektor
- 22: Spiegel-System
- 24: Teilspiegel
- 26: weiterer Teilspiegel
- 28: Schwinger / Lautsprecher
- 30: Spiegelfläche
- 32: Durchstrahl-Elemente / Platten
- 34: Durchlaßteil
- 36: drehbarer Durchlaßteil
- 40: Anschlüsse (für Spannungsquelle)
- 42: Kristall-System
- 44: kontaktfreier Teilkörper
- 46: kontaktierter Teilkörper
- 48: Kontaktflächen

- 52: Strahlaufnehmer (-modulator)
- 54: Durchlaßteil
- 56: weiterer Durchlaßteil
- 58: Fokussier-Einrichtung

## Patentansprüche

1. Vorrichtung zur Beeinflussung und Messung gepulster elektromagnetischer Strahlung, insbesondere Autokorrelator, mit einem Strahlaufnehmer (12), der ankommende elektromagnetische Strahlung, vorzugsweise paralleles Laserlicht (L), in zwei Teilstrahlen (S, T) aufspaltet, mit einer hinter dem Strahlaufnehmer (12) angeordneten Überlagerungs- oder Fokussiereinrichtung (18 bzw. 58), vorzugsweise einer Linse, welche die Teilstrahlen (S, T) zusammenführt, und mit einem im Vereinigungs-Bereich der Teilstrahlen (S, T) angeordneten Detektor (20), welcher die Teilstrahlen (S, T) erfaßt, **dadurch gekennzeichnet, daß** der mindestens zweiteilige Strahlaufnehmer (12) nebeneinander angeordnete Strahlprofilteiler (14, 16; 24, 26; 34, 36; 44, 46; 54, 56) aufweist, durch die in getrennten, vorzugsweise parallelen Teilstrahlen (S, T) vor deren Zusammenführung Änderungen der zeitbezogenen Strahlcharakteristik bewirkbar sind, wobei die Strahlprofilteiler (14, 16; 24, 26; 34, 36; 44, 46; 54, 56) relativ zueinander unterschiedlich derart steuerbar sind, daß eine Änderung mit bzw. in einem der Strahlprofilteiler (14,16; 24, 26; 34, 36; 44, 46; 54, 56) zu einer gesteuerten Veränderung der zeitbezogenen Strahlcharakteristik führt.

2. Vorrichtung nach Anspruch 1, **dadurch gekennzeichnet, daß** der Strahlaufnehmer (12) als Spiegel- (22), Platten- (32), Kammer- oder Kristall-System (42) wenigstens einen Strahlprofilteiler (14, 24, 34, 44, 54) aufweist, der einen Basis-Teilstrahl (S) schafft oder unverändert läßt, während durch wenigstens einen weiteren, dem ersten benachbarten Strahlprofilteiler (16, 26, 36, 46, 56) die zeitbezogene Charakteristik des bzw. jedes anderen Teilstrahls (T) gezielt beeinflußbar ist.

3. Vorrichtung nach Anspruch 1 oder 2, **dadurch gekennzeichnet, daß** der Strahlaufnehmer (12) ein in seiner Spiegelfläche (30) geteilter Spiegel ist, dessen Teilspiegel (24; 26) zueinander relativbeweglich, vorzugsweise in Richtung der Spiegelflächen-Normalen (N) verschieblich sind.

4. Vorrichtung nach einem der Ansprüche 1 bis 3, **dadurch gekennzeichnet, daß** zumindest ein Strahlprofilteiler (26) mit einem Schwingungserzeuger (28) verbunden ist, vorzugsweise mit einem rückseitig angeordneten Lautsprecher, Piezoschwinger o.dgl.

5. Vorrichtung nach Anspruch 1 oder 2, **dadurch gekennzeichnet, daß** Durchstrahl-Elemente (32) vorhanden sind, die relativ zueinander und/oder um eine zum einfallenden Strahl (L) in einem Winkel (W) stehende Achse (A) drehbar sind, wodurch Änderungen optischer Weglängen oder Zeitverzögerungen bewirkbar sind.

6. Vorrichtung nach Anspruch 5, **dadurch gekennzeichnet, daß** zwei oder mehr Durchstrahl-Elemente (34, 36) als Flachkörper (34, 36) ausgebildet sind, deren Dicke bzw. Materialstärke auf die zu messende Pulsform abgestimmt ist.

7. Vorrichtung nach Anspruch 5 oder 6, **dadurch gekennzeichnet, daß** die Durchstrahl-Elemente (34, 36) aus Glas, Quarz, Kunststoff o.dgl. bestehen, die Streifen- oder Plättchenform haben und dicht nebeneinander insbesondere hochkant oder quer angeordnet sind.

8. Vorrichtung nach Anspruch 5, **dadurch gekennzeichnet, daß** zumindest einer der Strahlprofilteiler (36) motorisch und/oder schwingend antreibbar ist

9. Vorrichtung nach Anspruch 1 oder 2, **dadurch gekennzeichnet, daß** der Strahlaufnehmer (12) ein würfel- oder quaderförmiges Kristall-System (42) ist, das einen entweder kontaktierten oder kontaktfreien Teilkörper (44) und wenigstens einen weiteren, mit Kontaktflächen (48) versehenen Teilkörper (46) aufweist, welcher durch ein elektrisches oder magnetisches oder elektromagnetisches Feld zustandsveränderlich ist.

10. Vorrichtung nach Anspruch 1 oder 2, **dadurch gekennzeichnet, daß** der Strahlaufnehmer (12, 52) ein durchstrahlbares Gehäuse aufweist, das als Strahlprofilteiler wenigstens zwei Durchlaßteile (54; 56) umschließt, durch die in getrennten, vorzugsweise parallelen Teilstrahlen (S, T) vor deren Zusammenführung Änderungen der zeitbezogenen Strahlcharakteristik bewirkbar sind, wobei ein Durchlaßteil (54), welcher einen Basis-Teilstrahl (S) schafft oder unverändert läßt, parallel zu wenigstens einem weiteren Durchlaßteil (56) angeordnet ist, mit bzw. in dem die zeitbezogene Charakteristik des bzw. jedes anderen Teilstrahls (T) gezielt beeinflußbar ist.

11. Vorrichtung nach Anspruch 10, **dadurch gekennzeichnet, daß** der bzw. jeder andere Teilstrahl (T) mit dem weiteren Durchlaßteil (56) phasenverschoben, vorzugsweise gegenphasig zu einem ersten Teilstrahl (S) steuerbar ist.

12. Vorrichtung nach einem der Ansprüche 1 bis 11, **dadurch gekennzeichnet, daß** zwischen einem Strahlaufnehmer (12; 52) und wenigstens einem Strahlprofilteiler (14, 16; 24, 26; 34, 36; 44, 46; 54, 56) oder zwischen wenigstens einem Strahlprofilteiler (14, 16; 24, 26; 34, 36; 44, 46; 54, 56) und dem Vereinigungs-Bereich ein zu untersuchendes Objekt einführbar ist.

13. Vorrichtung nach Anspruch 12, **dadurch gekennzeichnet, daß** ein zu untersuchendes Objekt einen der Strahlprofilteiler (14, 16; 24, 26; 34, 36; 44, 46; 54, 56) bildet und/oder daß zwei oder mehr zu untersuchende Objekte jeweils einen der Strahlprofilteiler (14, 16; 24, 26; 34, 36; 44, 46; 54, 56) bilden.

## Claims

1. A device for controlling and measuring pulsed electromagnetic radiation, in particular an auto-correlator, comprising a beam receiver (12) splitting incident electromagnetic radiation, preferably collimated laser light (L), into two split beams (S, T), further comprising a superposition or focusing means (18 resp. 58), preferably a lens, situated behind the beam receiver (12) and recombining the split beams (S, T), and comprising a detector (20) situated in the recombination zone of the split beams (S, T) for detecting these, wherein the beam receiver (12) constituted of at least two elements includes beam profile splitters (14, 16; 24, 26; 34, 36; 44, 46; 54, 56) which are configured next to each other and which implement, prior to recombination, changes in the beams' time-domain characteristics in the separate, preferably mutually parallel split beams (S, T), the beam profile splitters (14, 16; 24, 26; 34, 36; 44, 46; 54, 56) being controlled in relatively different manners such that a change with or in one of the beam profile splitters (14, 16; 24, 26; 34, 36; 44, 46; 54, 56) will entail a controlled change of the time-domain beam characteristics.

2. Device according to claim 1, wherein the beam receiver (12) is in the form a system of mirror(s) (22), plate(s) (32), chamber(s) or crystal(s) (42) and includes at least one beam profile splitter (14, 24, 34, 44, 54) generating a reference split beam (S) or leaving it unchanged, whereas the time-domain characteristic of the or each other split beam (T) is deliberately controlled.

3. Device according to claim 1 or claim 2, wherein the beam receiver (12) is a mirror of split specular surface (30) of which the split mirror elements (24; 26) are mutually displaceable, preferably in the direction of the normal (N) to the specular surface (30).

4. Device according to any one of claims 1 to 3, wherein at least one beam profile splitter (26) is associated to a vibrator (28), mounted at its back for instance to a loudspeaker, a piezoelectric vibrator or the like.

5. Device according to claim 1 or claim 2, comprising transmission components (32) which are rotatable mutually and/or about an axis (A) subtending an angle (W) with the incident beam (L) for implementing changes in optical path lengths or in time delays.

6. Device according to claim 5, wherein two or more transmission components (34, 36) are planar bodies (34, 36) the optical or material thickness of which is matched to the pulse shape to be measured.

7. Device according to claim 5 or to claim 6, wherein the transmission components (34, 36) consist of glass, quartz, plastic or the like and are in the form of strips or plates which are configured tightly adjacent to each other, in particular on edge or transversely.

8. Device according to claim 5, wherein at least one of the beam profile splitters (36) is adapted to be driven by a motor and/or by a vibrator.

9. Device according to claim 1 or claim 2, wherein the beam receiver (12) is a cubic or a parallele pipedic crystal system (42) comprising one beam splitting component (44) that is fitted or not with an electrical terminal and comprising at least one further beam splitting component (46) which is fitted with contact areas (48) and is adapted for condition altering by an electrical or magnetic or electromagnetic field.

10. Device according to claim 1 or claim 2, wherein the beam receiver (12, 52) comprises a transparent housing (50) that, in the form of beam profile splitters, encloses at least two transmission components (54; 58) which implement changes in the time-domain beam characteristics of the separate, preferably mutually parallel split beams (S, T) before these are recombined, one transmission component (54) which generates a reference split beam (S) or leaves it unaltered being configured parallel to at least one further transmission component (56) being adapted for deliberate control of the time-domain characteristic of the or each other split beam (T).

11. Device according to claim 10, wherein the or each other split beam (T) is adapted to be controlled in phase-shifted manner by means of the further transmission component (56), preferably so as to be 180° out of phase relative to a first split beam (S).

12. Device according to any one of claims 1 to 11, wherein an object to be examined is insertable between a beam receiver (12, 52) and at least one beam profile splitter (14, 16; 24, 26; 34, 36; 44, 46; 54, 56) or between at least one beam profile splitter (14, 16; 24, 26; 34, 36; 44, 46; 54, 56) or between at least one beam profile splitter (14, 16; 24, 26; 34, 36; 44, 46; 54, 56) and the recombination zone.

13. Device according to claim 12, wherein an object to be examined constitutes one of the beam profile splitters (14, 16; 24, 26; 34, 36; 44, 46; 54, 56) and/or wherein two or more objects to be examined each constitute one of the beam profile splitters (14, 16; 24, 26; 34, 36; 44, 46; 54, 56) and/or wherein two or more objects to be examined each constitute one of the beam profile splitters (14, 16; 24, 26; 34, 36; 44, 46; 54, 56).

## Revendications

1. Dispositif servant à influencer et mesurer un rayonnement électromagnétique pulsé. notamment un autocorrélateur, avec un récepteur de rayons (12) qui partage un rayonnement électromagnétique incident, de préférence une lumière laser parallèle (L), en deux rayons partiels (S, T), avec un dispositif de superposition ou de focalisation (18 ou 58) disposé derrière le récepteur de rayons (12), de préférence une lentille qui regroupe les rayons partiels (S. T). et avec un détecteur (20) disposé dans la zone de réunification des rayons partiels (S, T) et saisissant les rayons partiels (S, T), **caractérisé en ce que** le récepteur de rayons (12) en au moins deux corps présente des séparateurs du profil du rayonnement (14, 16; 24, 26; 34, 36: 44, 46: 54 56) disposés l'un à côté de l'autre, par lesquels on peut modifier les caractéristiques temporelles dans des rayons partiels séparés (S. T), de préférence parallèles, avant leur réunification, les séparateurs du profil du rayonnement (14, 16; 24, 26; 34, 36: 44, 46; 54 56) pouvant être réglés différemment l'un par rapport à l'autre, de manière à ce qu'une modification avec ou dans un séparateur du profil du rayonnement (14, 16; 24, 26; 34, 36; 44, 46; 54 56) conduit à une modification commandée de la caractéristique temporelle du rayon.

2. Dispositif selon la revendication 1, **caractérisé en ce que** le récepteur de rayons (12), en tant que système à miroirs (22), plaquettes (32), chambres ou cristal (42), dispose d'au moins un séparateur du profil du rayonnement (14, 24, 34, 44, 54) qui crée ou laisse inchangé un rayon partiel de base (S), alors que par au moins un autre séparateur du profil du rayonnement (16, 26, 36, 46, 56), voisin du premier, la caractéristique temporelle de l'autre ou de chaque autre rayon partiel (T) peut être influencée délibérément.

3. Dispositif selon la revendication 1 ou 2, **caractérisé en ce que** le récepteur de rayons (12) est un miroir à surface réfléchissante partagée (30), dont les miroirs partiels (24; 26) sont mobiles relativement l'un par rapport à l'autre, et de préférence déplaçables en direction de la normale (N) de la surface réféchissante.

4. Dispositif selon l'une des revendications 1 à 3, **caractérisé en ce qu'**au moins un séparateur du profil du rayonnement (26) est relié à un générateur d'oscillations (28), de préférence à un haut-parleur, un piézo-oscillateur ou autres, disposé sur le côté arrière.

5. Dispositif selon la revendication 1 ou 2, **caractérisé en ce qu'**il y a des éléments irradiables (32) qui sont rotatifs relativement l'un par rapport à l'autre et/ou autour d'un axe (A) formant un angle (W) avec la lumière incidente (L), ce qui produit des variations de parcours optiques et des retards temporels.

6. Dispositif selon la revendication 5, **caractérisé en ce que** deux éléments irradiables (34, 36) ou plus sont conçus en tant que corps plats (34, 36). dont l'épaisseur ou l'épaisseur du matériau est assortie à la forme d'impulsion à mesurer.

7. Dispositif selon la revendication 5 ou 6, **caractérisé en ce que** les éléments irradiables (34, 36) sont en verre, quartz, plastique ou autres, qu'ils ont la forme de bandes ou de plaquettes, et qu'ils sont disposés étroitement l'un à côté de l'autre, notamment sur chant ou transversalement.

8. Dispositif selon la revendication 5, **caractérisé en ce qu'**au moins un des séparateurs du profil du rayonnement (36) peut être entraîné par une force motrice et/ou oscillatrice.

9. Dispositif selon la revendication 1 ou 2, **caractérisé en ce que** le récepteur de rayons (12) est un système à cristal en forme de cube ou de parallélépipède (42), qui dispose d'un corps partiel (44) soit avec soit sans contacts, et d'au moins un autre corps partiel (46) pourvu de surfaces de contact (48), dont l'état peut être changé par un champ électrique, magnétique ou électromagnétique.

10. Dispositif selon la revendication 1 ou 2, **caractérisé en ce que** le récepteur de rayons (12, 52) dispose d'un boîtier irradiable, qui en tant que séparateur du profil du rayonnement entoure au moins deux éléments de passage (54, 56), par lesquels une modification de la caractéristique temporelle des rayons peut être provoquée dans des rayons partiels séparés (S, T), de préférence parallèles, avant leur réunification, alors qu'un élément de passage (54) créant ou laissant inchangé un rayon partiel de base (S) est agencé parallèlement à au moins un autre élément de passage (56), avec ou dans lequel la caractéristique temporelle de l'autre ou de chaque autre rayon partiel (T) peut être influencée délibérément.

11. Dispositif selon la revendication 10, **caractérisé en ce que** le ou chaque autre rayon partiel (T) peut être commandé au moyen de l'autre élément de passage (56) avec un décalage de phase, de préférence en opposition de phase envers un premier rayon partiel (S).

12. Dispositif selon l'une des revendications 1 à 11, **caractérisé en ce qu'**un objet à analyser peut être introduit entre un récepteur de rayons (12, 52) et au moins un séparateur du profil du rayonnement (14, 16; 24, 26; 34, 36: 44, 46; 54 56), ou entre au moins un séparateur du profil du rayonnement (14, 16; 24, 26; 34, 36; 44, 46; 54 56) et la zone de réunification.

13. Dispositif selon la revendication 12, **caractérisé en ce qu'**un objet à analyser forme l'un des séparateurs du profil du rayonnement (14, 16; 24, 26; 34. 36; 44, 46; 54 56) et/ou **en ce que** deux ou plusieurs objets à analyser forment chacun un séparateur respectif du profil du rayonnement (14, 16; 24, 26; 34, 36; 44, 46; 54 56).
